(19) Europäisches Patentamt

European Patent Office

Office européen des brevets

(11) **EP 1 578 055 B1**

(12) **FASCICULE DE BREVET EUROPEEN**

(45) Date de publication et mention
de la délivrance du brevet:
**08.11.2006 Bulletin 2006/45**

(51) Int Cl.:
*H04L 9/32* *(2006.01)*     *G06Q 20/00* *(2006.01)*

(21) Numéro de dépôt: **05290497.6**

(22) Date de dépôt: **07.03.2005**

(54) **Procédé de consultation sécurisée de récépissés de livraison d'objets**

Verfahren zur gesicherten Abfrage von Lieferscheinen für Gegenstände

Method for secure enquiry of article delivery receipts

(84) Etats contractants désignés:
**DE FR GB IT PT**

(30) Priorité: **16.03.2004 FR 0402682**

(43) Date de publication de la demande:
**21.09.2005 Bulletin 2005/38**

(73) Titulaire: **NEOPOST TECHNOLOGIES**
**92220 Bagneux (FR)**

(72) Inventeurs:
• **Abumehdi, Cyrus**
**Harlow, Essex CM179PU (GB)**

• **Blanluet, Patrick**
**75020 Paris (FR)**
• **Glaeser, Axel**
**2575 Tauffelen (CH)**

(74) Mandataire: **Joly, Jean-Jacques et al**
**Cabinet Beau de Loménie**
**158, rue de l'Université**
**75340 Paris Cédex 07 (FR)**

(56) Documents cités:
**US-A- 5 907 619          US-B1- 6 285 916**

## Description

Domaine de la technique

La présente invention se rapporte au domaine de la logistique relative au transport de marchandises, colis et paquets ou tout autre objet, et elle concerne plus particulièrement un procédé de consultation sécurisée des récépissés de livraison de ces marchandises.

Art antérieur

Les systèmes logistiques de suivi d'objets utilisés aujourd'hui par les transporteurs sont bien connus. Par exemple, dans le brevet US 5,313,051, il est décrit un système de suivi d'objets comportant un terminal portatif tenu en main par un livreur et muni d'un lecteur de codes à barres et d'un écran sensitif ainsi que de moyens de communication radio pour transférer les informations saisies à l'écran par ce livreur, notamment l'identification et la signature du destinataire, à un ordinateur central du transporteur. Un tel système permet au transporteur de disposer d'une information en temps réel relative aux marchandises livrées. Toutefois, cette information d'identification n'est pas consultable directement par les clients du transporteur non plus que celle relative au récépissé de livraison qui assure la preuve de la livraison. En effet, celui-ci ne peut être consulté par le client qu'une fois la tournée du livreur achevé et l'ensemble des récépissés remis à un centre de numérisation où, après traitement, leur consultation devient possible au travers d'un réseau de télécommunications.

US-A-6285916 décrit un système de suivi d'objects dans lequel un client du transporteur peut accéder en temps réel à l'information, après s'être identifié.

Objet et définition de l'invention

La présente invention a donc pour objet de pallier les inconvénients précités avec un procédé et un système de consultation sécurisée de récépissés de livraison d'objets permettant au client d'un transporteur une consultation sécurisée et en temps réel des différents récépissés relatifs à la livraison de ses marchandises à leur destinataire. Un but de l'invention est aussi de permettre si nécessaire une consultation non sécurisée, simple et sans aucune garantie de leur contenu, de ces récépissés. Un autre but de l'invention est de proposer un procédé simple en limitant les échanges d'informations nécessaires à la mise en oeuvre de ce système.

Ces buts sont atteints avec un procédé de consultation sécurisée de récépissés de livraison d'objets depuis un terminal informatique distant relié à un centre informatique de gestion au travers d'un réseau de télécommunications, une image numérique de chacun de ces récépissés ayant été préalablement saisie au niveau d'un terminal portable comportant une interface radio pour retransmettre cette image vers le centre informatique de gestion, caractérisé en ce que, pour consulter cette image numérique de façon sécurisée depuis le terminal informatique distant, on doit procéder au niveau de ce terminal informatique distant au décryptage, au moyen d'une clé $k_{SESSION}$ unique et différente à chaque consultation, d'une première donnée E1 générée dans le terminal portable à partir de cette image numérique, cette clé $k_{SESSION}$ unique résultant elle même du décryptage au niveau du centre informatique de gestion, au moyen d'une clé privée du centre informatique de gestion $k^{NLS}_{PRIV}$, d'une deuxième donnée E2 générée dans le terminal portable à partir de la clé $k_{SESSION}$ unique.

Ainsi, les données saisies au terminal portable par le livreur ne peuvent être consultées en ligne de façon sécurisée, par exemple immédiatement à l'issue de cette saisie, que si le client utilisateur est en possession des moyens de déchiffrer la clé de session unique préalablement cryptée au niveau du centre informatique de gestion.

Selon le mode de réalisation envisagé, on peut vérifier au moyen d'une première clé publique $k^{MMT}_{PUB}$ une signature S1 associée à l'image numérique, cette signature étant obtenue par décryptage dans le terminal informatique distant, au moyen de la clé $k_{SESSION}$ unique et différente à chaque consultation, de la première donnée E1 générée dans le terminal portable et transmise au centre informatique de gestion, cette clé unique $k_{SESSION}$ étant obtenue dans le terminal informatique par décryptage au moyen d'une seconde clé publique $k^{NLS}_{PUB}$ d'une troisième donnée E3 générée dans le centre informatique de gestion par cryptage au moyen d'une clé privée du centre informatique de gestion $k^{NLS}_{PRIV}$ de la clé unique $k_{SESSION}$ obtenue préalablement par décryptage au moyen de cette clé privée $k^{NLS}_{PRIV}$ de la deuxième donnée E2 générée dans le terminal portable et transmise au centre informatique de gestion.

On peut aussi vérifier au moyen d'une première clé publique $k^{MMT}_{PUB}$ une signature S1 associée à l'image numérique, cette signature étant obtenue par décryptage dans le terminal informatique distant, au moyen de la clé $k_{SESSION}$ unique et différente à chaque consultation, de la première donnée E1 générée dans le terminal portable et transmise au centre informatique de gestion, cette clé unique $k_{SESSION}$ étant transmise par le centre informatique de gestion avec une signature S2 associée à cette clé unique $k_{SESSION}$ et vérifiée dans le terminal informatique distant au moyen d'une seconde clé publique $k^{NLS}_{PUB}$, la signature S2 résultant de la signature avec une clé privée du centre informatique de gestion $k^{NLS}_{PRIV}$ de la clé unique $k_{SESSION}$ obtenue préalablement par décryptage au moyen de cette clé privée $k^{NLS}_{PRIV}$ de la deuxième donnée E2 générée dans le terminal portable et transmise au centre informatique de gestion.

De préférence, la première donnée E1 est obtenue par cryptage au moyen de la clé unique $k_{SESSION}$ de la signature S1 et la deuxième donnée E2 est obtenue par cryptage de la clé unique $K_{SESSION}$ au moyen de la seconde clé publique $k^{NLS}_{PUB}$, la signature S1 résultant de la signature de l'image numérique du récépissé avec une clé privée du terminal portable $k^{MMT}_{PRIV}$.

Selon le mode de réalisation envisagée, la première clé publique $k^{MMT}_{PUB}$ peut être cryptée, au moyen de la seconde clé publique $k^{NLS}_{PUB}$, pour obtenir une première donnée de clé $E_{k1}$ qui est transmise au centre informatique de gestion au niveau duquel cette première donnée de clé $E_{k1}$ est décryptée, au moyen de la clé privée du centre informatique de gestion $k^{NLS}_{PRIV}$, pour récupérer la première clé publique $k^{MMT}_{PUB}$, qui est alors une nouvelle fois cryptée, au moyen de la clé privée du centre informatique de gestion $k^{NLS}_{PRIV}$, pour obtenir une seconde donnée de clé $E_{k2}$ à partir de laquelle le client peut récupérer par décryptage, au moyen de la seconde clé publique $k^{NLS}_{PUB}$, la première clé publique $k^{MMT}_{PUB}$. La première donnée de clé $E_{k1}$ est avantageusement transmise au centre informatique de gestion avec l'image numérique du récépissé et les première et deuxième données E1 et E2.

La première clé publique $k^{MMT}_{PUB}$ peut aussi être signée au moyen de la clé privée $k^{NLS}_{PRIV}$ pour obtenir une signature de clé $S_{k1}$ qui est transmise avec la première clé publique $k^{MMT}_{PUB}$ au centre informatique de gestion au niveau duquel cette signature de clé $S_{k1}$ est vérifiée au moyen de la clé seconde publique $k^{NLS}_{PUB}$ avant d'être retransmise avec la première clé publique $k^{MMT}_{PUB}$ au terminal du client au niveau duquel cette signature de clé $S_{k1}$ est une nouvelle fois vérifiée au moyen de la clé seconde publique $k^{NLS}_{PUB}$, le résultat de cette vérification consistant en un aval ou un refus de la première clé publique $k^{MMT}_{PUB}$. La signature de clé $S_{k1}$ est avantageusement transmise au centre informatique de gestion avec l'image numérique du récépissé et les première et deuxième données E1 et E2.

De préférence, le réseau de télécommunications est le réseau Internet, le processus de cryptage/décryptage est du type DES, triple DES ou AES et l'image numérique du récépissé est transmise avec des données d'identification et d'autres informations relatives à la livraison saisies au terminal portable.

Brève description des dessins

L'invention sera mieux comprise au vu de la description détaillée qui va suivre accompagnée par des exemples illustratifs et non limitatifs en regard des figures suivantes sur lesquelles :

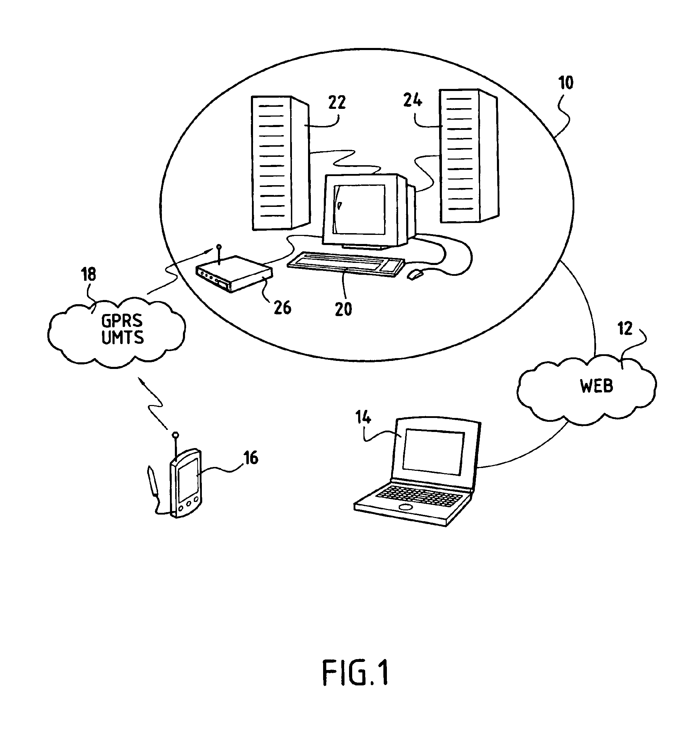

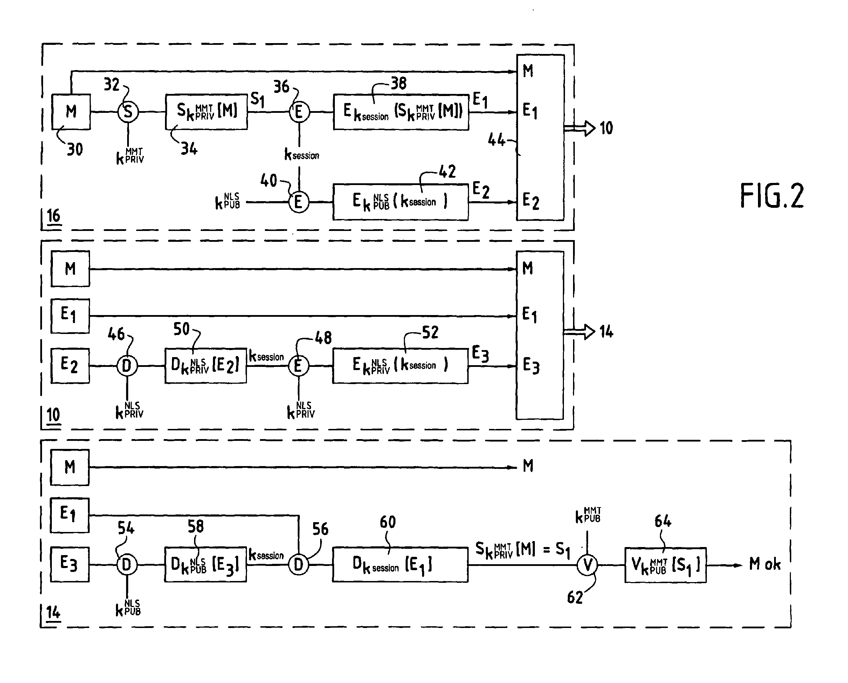

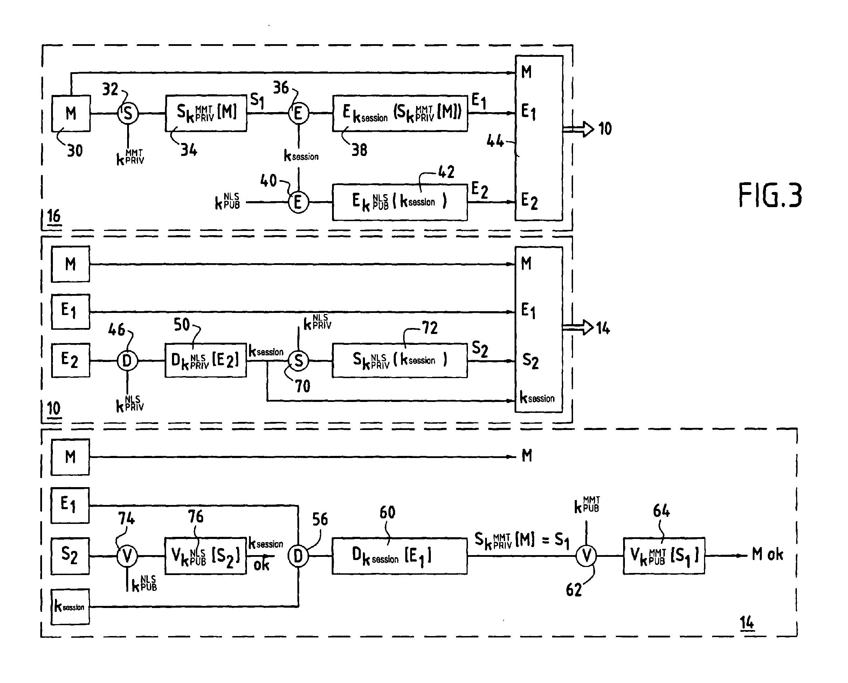

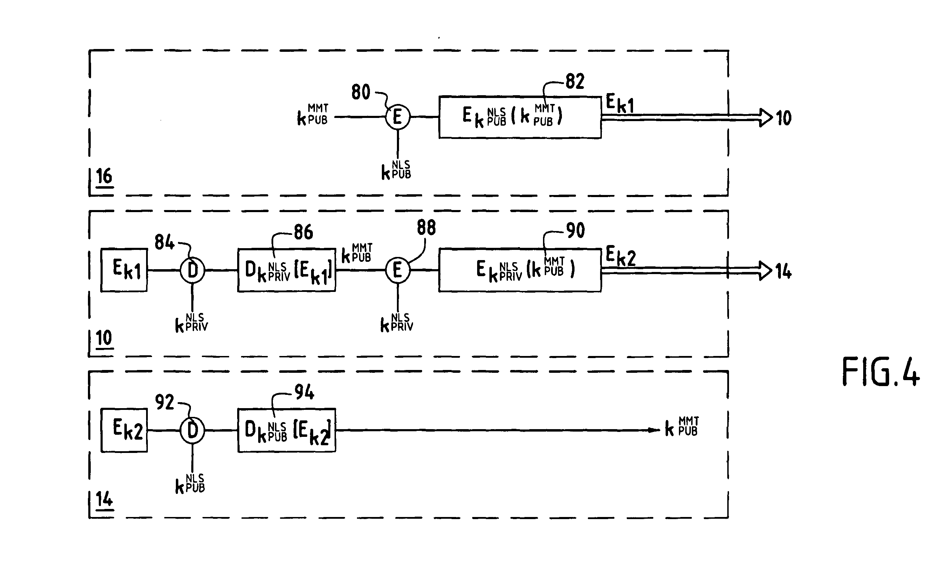

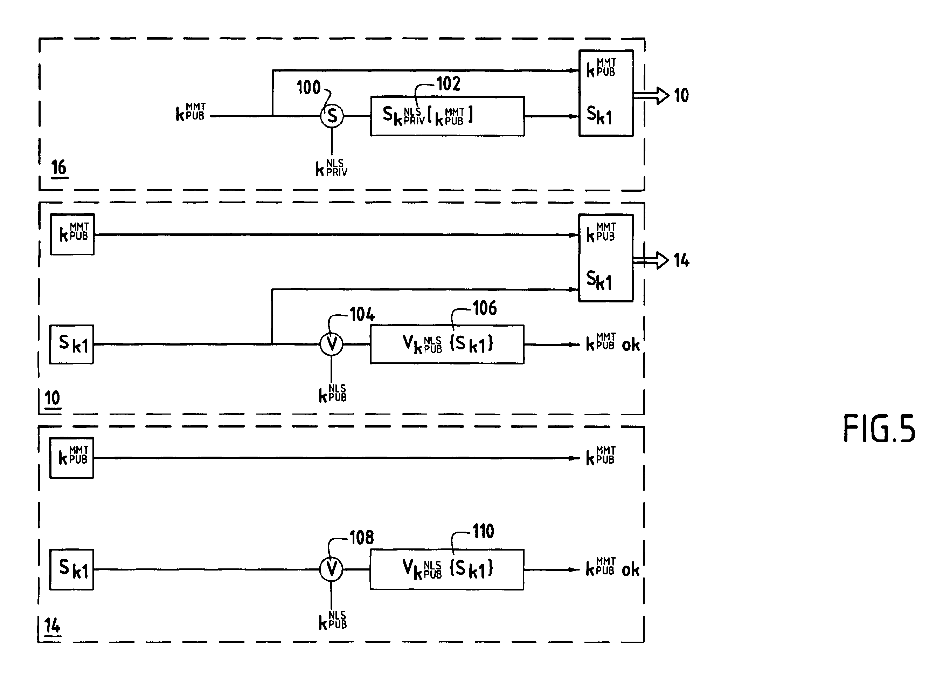

   . la figure 1 est une vue générale d'une architecture de réseau informatique permettant une consultation sécurisée de la livraison d'objets selon l'invention,
   . les figures 2 et 3 montrent les différentes étapes de deux exemples de réalisation d'un processus de vérification des messages envoyés par un terminal portable du réseau de la figure 1, et
   . les figures 4 et 5 représentent différentes étapes de deux exemples de réalisation d'un processus de transfert de clés mis en oeuvre dans le réseau de la figure 1.

Description détaillée de modes de réalisation

La figure 1 illustre l'architecture d'un réseau informatique d'un transporteur de marchandises, colis ou paquets ou encore tout autre objet de même nature, nécessaire à la mise en oeuvre d'une consultation sécurisée des récépissés de livraison selon l'invention. On notera toutefois qu'il n'est pas obligatoire que ce réseau appartienne au transporteur et qu'il peut tout aussi bien appartenir à un organisme tiers assurant en tant que mandataire de ce transporteur la réception des récépissés et des informations de livraison.

Cette architecture de réseau est organisée autour d'un centre informatique de gestion 10 relié à un premier réseau de télécommunications 12 de type Internet. Le centre informatique de gestion comporte un ou plusieurs serveurs informatiques, par exemple un serveur 20, auquel sont reliées des bases de données 22, 24 dont une base de données d'images 22 accessible depuis des terminaux informatiques distants, par exemple un ordinateur personnel 14, au travers du réseau Internet. Le serveur est aussi pourvu d'un modem radio 26 pour recevoir des données d'un terminal portable multifonctions 16 au travers d'un second réseau de télécommunications 18 de type GPRS ou UMTS.

Avec cette architecture, il est possible au client d'un transporteur de consulter en temps réel les récépissés de livraison de ses marchandises à leur destinataire ainsi que toutes autres informations relatives à cette livraison entrée au terminal portable multifonctions par un employé du transporteur, en général un chauffeur-livreur. Cette consultation s'effectue à distance très simplement au travers du réseau Internet 12 depuis un poste utilisateur quelconque du client, ordinateur personnel 14 ou tout autre équipement informatique permettant un accès au réseau Internet (assistant personnel par exemple). Bien entendu, les récépissés et les autres informations relatives à la livraison saisies chez le destinataire des marchandises, au niveau du terminal portable multifonctions 16 tenu en main par l'employé du transporteur, ont été préalablement transmises, en temps réel, au centre informatique 10 de gestion de ces informations via le réseau de télécommunications 18.

Le détail des informations transmises est donné dans la demande de brevet déposée le même jour par la demanderesse et intitulée « système de suivi optimisé de livraison d'objets ». Ces informations, outre l'image numérique du récépissé de livraison portant le cachet commercial du destinataire, comportent tous les renseignements utiles relatifs à la réception de la livraison des marchandises à son destinataire, comme le nom de ce destinataire, les date et heure de livraison, le nombre de colis livrés, éventuellement le nombre de colis refusés, la signature et le nom du signataire du récépissé de livraison, et éventuellement les réserves exprimées à la livraison. En outre, une photographie (image numérique) d'un colis refusé et/ou du destinataire ou encore un commentaire vocal du chauffeur-livreur ou du destinataire peut avantageusement venir compléter les informations précédentes, de même que le nombre des équipements consignés par type d'équipement ou le règlement de frais de port si la livraison est effectuée contre remboursement.

Selon l'invention, la transmission de toutes ces informations à travers le réseau, comme leur consultation ultérieure, est sécurisée afin de garantir au client une non altération de ces informations. Le procédé de consultation sécurisée assurant cette garantie de transmission est maintenant décrit en regard des figures 2 à 5. Il repose sur des protocoles de chiffrement et de création de signature décrits aux figures 2 et 3.

Sa mise en oeuvre suppose au préalable la création de quatre clés qui seront stockées dans le terminal portable multifonctions avant toute utilisation, de préférence lors de la fabrication ou la mise en fonction du terminal dans les locaux du transporteur ou de son mandataire. Les deux premières clés sont spécifiques au terminal et comprennent une clé privée du terminal $k^{MMT}_{PRIV}$ et une première clé publique $k^{MMT}_{PUB}$. Les deux autres clés sont spécifiques au transporteur et comprennent aussi une clé privée du centre informatique de gestion $k^{NLS}_{PRIV}$ et une seconde clé publique $k^{NLS}_{PUB}$. Les deux clés privées sont par nature inconnues du client ou de toute personne autre que le transporteur ou son mandataire alors que les deux clés publiques sont d'accès libre pour le client. Elles peuvent toutefois faire l'objet du processus d'échange de clés décrit aux figures 4 et 5.

La figure 2 illustre un premier exemple du procédé de consultation sécurisée selon l'invention. Le message 30 transmis par le terminal portable multifonctions est tout d'abord signé 32 au moyen de la clé privée du terminal portable $k^{MMT}_{PRIV}$ pour obtenir une signature S1. Puis, au moyen d'une clé unique appelée $K_{SESSION}$ élaborée au niveau du terminal, cette signature 34 est cryptée 36 pour délivrer une première donnée 38 cryptée E1. Parallèlement, cette clé unique est cryptée 40 au moyen de la seconde clé publique $k^{NLS}_{PUB}$ pour délivrer une deuxième donnée 42 cryptée E2. Une fois les première et deuxième données délivrées, elles sont envoyées 44 vers le centre informatique de gestion conjointement avec le message M (qui est donc transmis en clair) qui a servi à leur création.

Lorsque le centre informatique de gestion reçoit ces données E1 et E2 et le message M, il récupère tout d'abord la clé unique $k_{SESSION}$ en procédant au décryptage 46 de la donnée E2 au moyen de la clé privée du centre informatique de gestion $k^{NLS}_{PRIV}$, puis il crypte à nouveau 48 cette clé 50 au moyen de la clé privée $k^{NLS}_{PRIV}$ pour obtenir une troisième donnée 52 cryptée E3.

Dès lors, et sous réserve d'une connexion au centre informatique de gestion avec éventuellement la fourniture d'un numéro de compte et d'un mot de passe par exemple, le client peut au travers du réseau Internet avoir déjà accès au message M et consulter ainsi librement les données transmises par le terminal en accédant quasiment au moment de la livraison à toutes les données relatives à cette livraison et notamment à celles lui permettant de se constituer une preuve de la livraison, c'est à dire l'image du récépissé de livraison portant le cachet commercial du destinataire, l'identification et la signature de la personne ayant reçue les marchandises, les date et heure de la livraison. Toutefois, à ce stade, ces données sont brutes et aucunement soumises à un processus de vérification qui pourrait attester de leur validité. Pour accéder à ce processus, le client doit en faire la demande au centre informatique de gestion qui lui donnera alors accès également aux données E1 et E3.

A partir de E3, le client pourra récupérer sur son ordinateur personnel la clé $k_{SESSION}$ en procédant au décryptage 54 de cette donnée au moyen de la seconde clé publique $k^{NLS}_{PUB}$. Puis en procédant au décryptage 56 de la donnée E1 à partir de la clé 58 ainsi obtenue, il pourra ensuite obtenir la signature S1 associée au message M, signature 60 dont il pourra alors vérifier 62 la validité au moyen de la première clé publique $k^{MMT}_{PUB}$. Le résultat de cette vérification consistant en un aval ou un refus 64 du contenu du message M.

La figure 3 illustre un second exemple du procédé de consultation sécurisée selon l'invention. Comme dans l'exemple précédent, le processus de transfert du message vers le centre informatique de gestion est inchangé. Ainsi, le message 30 transmis par le terminal portable multifonctions est tout d'abord signé 32 au moyen de la clé privée du terminal portable $k^{MMT}_{PRIV}$ pour obtenir une signature S1. Puis, au moyen de la clé unique appelée $k_{SESSION}$ élaborée au niveau du terminal, cette signature 34 est cryptée 36 pour délivrer une première donnée 38 cryptée E1. Parallèlement, cette clé unique est cryptée 40 au moyen de la seconde clé publique $k^{NLS}_{PUB}$ pour délivrer une deuxième donnée 42 cryptée E2. Une fois les première et deuxième données délivrées, elles sont envoyées 44 vers le centre informatique de gestion conjointement avec le message M (qui est donc transmis en clair) qui a servi à leur création. Par contre, le traitement au niveau du centre informatique de gestion est légèrement différent.

En effet, lorsque le centre informatique de gestion reçoit les données E1 et E2 et le message M, il récupère tout d'abord la clé unique $K_{SESSION}$ en procédant au décryptage 46 de la donnée E2 au moyen de la clé privée du centre informatique de gestion $k^{NLS}_{PRIV}$, mais au lieu de crypter à nouveau cette clé unique 50, il la signe 70 au moyen de la clé privée $k^{NLS}_{PRIV}$ pour obtenir une seconde signature S2. A ce stade, comme précédemment, le client peut s'il le souhaite consulter sans garantie le message M. Par contre, s'il désire que ce message soit validé, il devra en faire la requête auprès du centre informatique qui lui donnera alors accès également à la première donnée E1, à cette seconde signature 72 et à la clé unique $k_{SESSION}$.

Dès lors, le client pourra vérifier sur son ordinateur personnel la validité de la clé $k_{SESSION}$ en procédant à la vérification 74 de la signature S2 au moyen de la seconde clé publique $k^{NLS}_{PUB}$, le résultat de cette vérification consistant en un aval ou un refus 76 de la clé reçue. Si ce test est positif, il pourra procéder au décryptage 56 de la donnée E1 à partir de la clé unique $K_{SESSION}$ ainsi validée et obtenir alors la signature S1 associée au message M, signature 60 dont il pourra alors vérifier 62 la validité au moyen de la première clé publique $k^{MMT}_{PUB}$. Le résultat de cette vérification consistant en un aval ou un refus 64 du contenu du message M.

Dans les deux exemples précédents, il a été supposé que le client ait à sa disposition la première clé publique $k^{MMT}_{PUB}$ lui permettant de vérifier la signature du message M. Mais, il est aussi possible d'envisager que cette clé soit transférée à son ordinateur depuis le terminal personnel multifonctions via le centre informatique de gestion comme l'illustrent les figures 4 et 5.

Sur la figure 4, ce transfert repose sur un processus de cryptage. La première clé publique $k^{MMT}_{PUB}$ est tout d'abord cryptée 80 au moyen de la seconde clé publique $k^{NLS}_{PUB}$ pour obtenir une première donnée de clé $E_{k1}$ qui est transmise au centre informatique de gestion avec le message M et les données E1 et E2. Au centre informatique de gestion, cette donnée de clé 82 est décryptée 84 au moyen de la clé privée $k^{NLS}_{PRIV}$ pour obtenir la clé initiale 86 qui est à nouveau cryptée 88 mais cette fois au moyen de la clé privée $k^{NLS}_{PRIV}$ pour délivrer une seconde donnée de clé $E_{k2}$. C'est à partir de cette seconde donnée de clé 90 que le client peut alors récupérer par décryptage 92 au moyen de la seconde clé publique $k^{NLS}_{PUB}$, la première clé publique $k^{MMT}_{PUB}$.

Sur la figure 5, le transfert précité repose sur un processus de création de signature. La première clé publique $k^{MMT}_{PUB}$ est tout d'abord signée 100 au moyen de la clé privée du centre informatique de gestion $k^{NLS}_{PRIV}$ pour obtenir une signature de clé $S_{k1}$. Cette signature de clé 102 est ensuite transmise avec la première clé publique $k^{MMT}_{PUB}$ au centre informatique de gestion avec le message M et les données E1 et E2. Au centre informatique de gestion, cette signature de clé $S_{k1}$ est vérifiée 104 au moyen de la seconde clé publique $k^{NLS}_{PUB}$, le résultat de cette vérification consistant en un aval ou un refus 106 de la première clé publique reçue $k^{MMT}_{PUB}$. Au niveau de son terminal, le client en ayant accès à la signature de clé $S_{k1}$ pourra à son tour vérifier 108 cette signature au moyen de la seconde clé publique $K^{NLS}_{PUB}$, le résultat de cette vérification consistant en un aval ou un refus 110 de la première clé publique $k^{MMT}_{PUB}$.

Dans tous les échanges précédents, le processus de cryptage/décryptage repose sur l'utilisation d'un algorithme classique de type DES, triple DES ou AES bien connu de l'homme de l'art et auquel il convient de se reporter si nécessaire.

Ainsi, avec le procédé de l'invention, le client peut consulter en ligne toutes les informations sur sa livraison (y compris les équipements consignés, les sommes perçues, par exemple) et de n'importe quel lieu du fait de l'accès par le réseau Internet. En outre, le processus de vérification associé reposant sur un cryptage ou une signature des données transmisses lui permet de se constituer des éléments de preuve de livraison de ses marchandises entrant dans la constitution d'une véritable preuve légale.

## Revendications

1. Procédé de consultation sécurisée de récépissés de livraison d'objets depuis un terminal informatique distant (14) relié à un centre informatique de gestion (10) au travers d'un réseau de télécommunications (12), une image numérique de chacun de ces récépissés (30) ayant été préalablement saisie au niveau d'un terminal portable (16) comportant une interface radio pour retransmettre cette image vers le centre informatique de gestion, **caractérisé en ce que**, pour consulter cette image numérique de façon sécurisée depuis le terminal informatique distant, on doit procéder au niveau de ce terminal informatique distant au décryptage (56), au moyen d'une clé $k_{SESSION}$ unique et différente à chaque consultation, d'une première donnée E1 générée (32, 34, 36) dans le terminal portable à partir de cette image numérique, cette clé $k_{SESSION}$ unique résultant elle même du décryptage (46) au niveau du centre informatique de gestion, au moyen d'une clé privée du centre informatique de gestion $k^{NLS}_{PRIV}$, d'une deuxième donnée E2 générée (40) dans le terminal portable à partir de la clé $k_{SESSION}$ unique.

2. Procédé de consultation sécurisée de récépissés de livraison d'objets selon la revendication 1, **caractérisé en ce que** on vérifie (62) au moyen d'une première clé publique $k^{MMT}_{PUB}$ une signature S1 (60) associée à l'image numérique, cette signature étant obtenue par décryptage (56) dans le terminal informatique distant, au moyen de la clé $k_{SESSION}$ unique et différente à chaque consultation, de la première donnée E1 générée dans le terminal portable et transmise au centre informatique de gestion, cette clé unique $k_{SESSION}$ étant obtenue dans le terminal informatique par décryptage (54) au moyen d'une seconde clé publique $k^{NLS}_{PUB}$ d'une troisième donnée E3 (52) générée dans le centre informatique de gestion par cryptage (48) au moyen de la clé privée du centre informatique de gestion $k^{NLS}_{PRIV}$ de la clé unique $k_{SESSION}$ obtenue préalablement par décryptage (46) au moyen de cette clé privée $k^{NLS}_{PRIV}$ de la deuxième donnée E2 générée dans le terminal portable et transmise au centre informatique de gestion.

**3.** Procédé de consultation sécurisée de récépissés de livraison d'objets selon la revendication 1, **caractérisé en ce que** on vérifie (62) au moyen d'une première clé publique $k^{MMT}_{PUB}$ une signature S1 (60) associée à l'image numérique, cette signature étant obtenue par décryptage (56) dans le terminal informatique distant, au moyen de la clé $k_{SESSION}$ unique et différente à chaque consultation, de la première donnée E1 générée dans le terminal portable et transmise au centre informatique de gestion, cette clé unique $k_{SESSION}$ étant transmise par le centre informatique de gestion avec une signature S2 associée à cette clé unique $k_{SESSION}$ et vérifiée (74) dans le terminal informatique distant au moyen d'une seconde clé publique $k^{NLS}_{PUB}$, la signature S2 résultant de la signature (70) avec la clé privée du centre informatique de gestion $k^{NLS}_{PRIV}$ de la clé unique $k_{SESSION}$ obtenue préalablement par décryptage (46) au moyen de cette clé privée $k^{NLS}_{PRV}$ de la deuxième donnée E2 générée dans le terminal portable et transmise au centre informatique de gestion.

**4.** Procédé de consultation sécurisée de récépissés de livraison d'objets selon la revendication 2 ou la revendication 3, **caractérisé en ce que** la première donnée E1 est obtenue par cryptage (36) au moyen de la clé unique $k_{SESSION}$ de la signature S1 et la deuxième donnée E2 est obtenue par cryptage (40) de la clé unique $k_{SESSION}$ au moyen de la seconde clé publique $k^{NLS}_{PUB}$, la signature S1 résultant de la signature (32) de l'image numérique du récépissé avec une clé privée du terminal portable $k^{MMT}_{PRIV}$.

**5.** Procédé de consultation sécurisée de récépissés de livraison d'objets selon la revendication 2 ou la revendication 3, **caractérisé en ce que** la première clé publique $K^{MMT}_{PUB}$ est cryptée (80), au moyen de la seconde clé publique $K^{NLS}_{PUB}$, pour obtenir une première donnée de clé $E_{k1}$ qui est transmise au centre informatique de gestion au niveau duquel cette première donnée de clé $E_{k1}$ (82) est décryptée (84), au moyen de la clé privée du centre informatique de gestion $k^{NLS}_{PRIV}$, pour récupérer la première clé publique $k^{MMT}_{PUB}$ (86), qui est alors une nouvelle fois cryptée (88), au moyen de la clé privée du centre informatique de gestion $k^{NLS}_{PRIV}$, pour obtenir une seconde donnée de clé $E_{k2}$ à partir de laquelle le client peut récupérer par décryptage (92), au moyen de la seconde clé publique $k^{NLS}_{PUB}$, la première clé publique $k^{MMT}_{PUB}$.

**6.** Procédé de consultation sécurisée de récépissés de livraison d'objets selon la revendication 5, **caractérisé en ce que** la première donnée de clé $E_{k1}$ est transmise au centre informatique de gestion avec l'image numérique du récépissé et les première et deuxième données E1 et E2.

**7.** Procédé de consultation sécurisée de récépissés de livraison d'objets selon la revendication 2 ou la revendication 3, **caractérisé en ce que** la première clé publique $k^{MMT}_{PUB}$ est signée (100) au moyen de la clé privée $k^{NLS}_{PRIV}$ pour obtenir une signature de clé $S_{k1}$ qui est transmise avec la première clé publique $k^{MMT}_{PUB}$ au centre informatique de gestion au niveau duquel cette signature de clé $S_{k1}$ est vérifiée (104) au moyen de la clé seconde publique $k^{NLS}_{PUB}$ avant d'être retransmise avec la première clé publique $k^{MMT}_{PUB}$ au terminal du client au niveau duquel cette signature de clé $S_{k1}$ est une nouvelle fois vérifiée (108) au moyen de la seconde clé publique $k^{NLS}_{PUB}$, le résultat de cette vérification consistant en un aval ou un refus (110) de la première clé publique $k^{MMT}_{PUB}$.

**8.** Procédé de consultation sécurisée de récépissés de livraison d'objets selon la revendication 7, **caractérisé en ce que** la signature de clé $S_{k1}$ est transmise au centre informatique de gestion avec l'image numérique du récépissé et les première et deuxième données E1 et E2.

**9.** Procédé de consultation sécurisée de récépissés de livraison d'objets selon l'une quelconque des revendications 1 à 8, **caractérisé en ce que** le réseau de télécommunications est le réseau Internet.

**10.** Procédé de consultation sécurisée de récépissés de livraison d'objets selon l'une quelconque des revendications 1 à 9, **caractérisé en ce que** le processus de cryptage/décryptage est du type DES, triple DES ou AES.

**11.** Procédé de consultation sécurisée de récépissés de livraison d'objets selon l'une quelconque des revendications 1 à 10, **caractérisé en ce que** l'image numérique du récépissé est transmise avec des données d'identification et d'autres informations relatives à la livraison saisies au terminal portable.

**Claims**

**1.** A secure method of consulting article delivery receipts from a remote computer terminal (14) connected to a management computer centre (10) via a telecommunications network (12), a digital image of each receipt (30) being initially input to a portable terminal (16) including a radio interface for retransmitting the image to the management computer centre, said method being **characterised in that** in order to consult said digital image in secure manner from the remote computer terminal, it is necessary in said remote computer terminal to use a key k$_{SESSION}$ that is unique and different for each consultation, to decrypt (56) first data E1 generated (32, 34, 36) in the portable terminal from said digital image, said unique key k$_{SESSION}$ itself being the result of the management computer centre using a private key $k_{PRIV}^{NLS}$ of the management computer centre to decrypt (46), second data E2 generated (40) in the portable terminal from the unique key k$_{SESSION}$.

2. A secure method of consulting article delivery receipts according to claim 1, **characterised in that** a first public key $k_{PUB}^{MMT}$ is used to verify (62) a signature S1 (60) associated with the digital image, this signature being obtained in the remote computer terminal by using the unique key k$_{SESSION}$ that is different on each consultation to decrypt (56) the first data E1 generated in the portable terminal and transmitted to the management computer centre, the unique key k$_{SESSION}$ being obtained in the computer terminal by using a second public key $k_{PUB}^{NLS}$ to decrypt (54) third data E3 (52) generated in the management computer centre by using the private key $k_{PRIV}^{NLS}$ of the management computer centre to encrypt (48) the unique key k$_{SESSION}$ as obtained previously by using said private key $k_{PRIV}^{NLS}$ to decrypt (46) the second data E2 generated in the portable terminal and transmitted to the management computer centre.

3. A secure of consulting article delivery receipts according to claim 1, **characterised in that** a first key $k_{PUB}^{MMT}$ is used to verify (62) a signature S1 (60) associated the digital said signature being obtained in the remote computer terminal by using the key k$_{SESSION}$ that is on each to decrypt (56) the first data E1 generated in the portable terminal and transmitted to the management computer centre, this unique key k$_{SESSION}$ being transmitted by the management computer centre together with a signature S2 associated with said unique key k$_{SESSION}$ and being verified (74) in the remote computer terminal by means of a second public key $k_{PUB}^{NLS}$, the signature S2 itself being the result of the unique key K$_{SESSION}$ as obtained previously by using said private key $k_{PRIV}^{NLS}$ to decrypt (46) the second data E2 generated in the portable terminal and transmitted to the management computer centre, being signed (70) with the private key $k_{PRIV}^{NLS}$ of the management computer centre.

4. A secure method of consulting article delivery receipts according to claim 2 or claim 3, **characterised in that** the first data E1 is obtained by using the unique key K$_{SESSION}$ to encrypt (36) the signature S1, and the second data E2 is obtained by using the unique key K$_{SESSION}$ to encrypt (40) the second public key $k_{PUB}^{NLS}$, the signature S1 itself being the result of the digital image of the receipt being signed (32) with a private key $k_{PRIV}^{NLS}$ of the portable terminal.

5. A secure method of consulting article delivery receipts according to claim 2 or claim 3, **characterised in that** the first public key $k_{PUB}^{MMT}$ is encrypted (80) by means of the second public key $k_{PUB}^{NLS}$ to obtain first key data E$_{k1}$ which is transmitted to the management computer centre where said first key data E$_{k1}$ (82) is decrypted (84) using the private key $k_{PRIV}^{NLS}$ of the management computer centre in order to recover the first public key $k_{PUB}^{MMT}$ (86), which key is then encrypted (88) again using the private key $k_{PRIV}^{NLS}$ of the management computer centre in order to obtain second key data E$_{k2}$ from which the client can recover the first public key $k_{PUB}^{MMT}$ by decrypting (92) by means of the second public key $k_{PUB}^{NLS}$.

6. A secure method of consulting article delivery receipts according to claim 5, **characterised in that** the first key E$_{k1}$ is transmitted to the management computer centre together with the digital image of the receipt and the first and second data E1 and E2.

7. A secure method of consulting article delivery receipts according to claim 2 or claim 3, **characterised in that** the first public key $k_{PUB}^{MMT}$ is signed by means of the key $k_{PRIV}^{NLS}$ in order to obtain a key signature S$_{k1}$ which is retransmitted together with the first public key $k_{PUB}^{MMT}$ to the management computer centre where said key signature S$_{k1}$ is verified (104) by means of the second public key $k_{PUB}^{NLS}$ prior to being retransmitted together with the first public key $k_{PUB}^{MMT}$ to the client terminal where said key signature $S_{k1}$ is again verified (108) by means of the second public key $k_{PUB}^{NLS}$, the result of this verification constituting acceptance or refusal (110) of the first public key $k_{PUB}^{MMT}$.

8. A secure method of consulting article delivery receipts according to claim 7, **characterised in that** the key signature $S_{k1}$ is transmitted to the management computer centre together with the digital image of the receipt and the first and second data E1 and E2.

9. A secure method of consulting article delivery receipts according to any one of claims 1 to 8, **characterised in that** the telecommunications network is the Internet network.

10. A secure method of consulting article delivery receipts according to any one of claims 1 to 9, **characterised in that** the encrypting/decrypting process is of the DES, triple DES, or AES type.

11. A secure method of consulting article delivery receipts according to any one of claims 1 to 10" **characterised in that** the digital image of the receipt is transmitted together with identity data and other information relating to the delivery as input to the portable terminal.

**Patentansprüche**

1. Verfahren zur gesicherten Abfrage von Lieferscheinen von Gegenständen von einem entfernten Computerendgerät (14), das mit einem Computerverwaltungszentrum (10) über ein Telekommunikationsnetz (12) verbunden ist, wobei ein digitales Bild von jedem dieser Lieferscheine (30) vorher auf der Ebene eines tragbaren Endgeräts (16) eingegeben worden ist, umfassend eine Funkschnittstelle, um dieses Bild zu dem Computerverwaltungszentrum zurück zu übertragen, **dadurch gekennzeichnet, daß**, um dieses digitale Bild in gesicherter Weise von dem entfernten Computerendgerät aus abzufragen, man auf der Ebene dieses entfernten Computerendgerätes eine Entschlüsselung (56) mittels eines Schlüssels $k_{SESSION}$, der einzigartig und unterschiedlich für jede Abfrage ist, von einer ersten Eingabe E1 vornehmen muß, die in dem tragbaren Endgerät aus dem digitalen Bild erzeugt wird (32, 34, 36), wobei dieser Schlüssel $k_{SESSION}$, der einzigartig ist, selbst aus dem Entschlüsseln (46) auf der Ebene des Computerverwaltungszentrums resultiert mittels eines privaten Schlüssels des Computerverwaltungszentrums $k_{PRIV}^{NLS}$ von einer zweiten Eingabe E2, die erzeugt wird (40) in dem tragbaren Endgerät aus dem einzigartigen Schlüssel $k_{SESSION}$.

2. Verfahren zur gesicherten Abfrage von Lieferscheinen von Gegenständen nach Anspruch 1, **dadurch gekennzeichnet, daß** man mittels eines ersten öffentlichen Schlüssels $k_{PUB}^{MMT}$ eine Signatur S1 (60) überprüft (62), die dem digitalen Bild zugeordnet ist, wobei diese Signatur durch Entschlüsseln (56) in dem entfernten Computerendgerät erhalten wird, mittels des Schlüssels $k_{SESSION}$, der einzigartig und für jede Abfrage verschieden ist, von der ersten Eingabe E1, die in dem tragbaren Endgerät erzeugt ist und zum Computerverivaltungszentrum übertragen wird, wobei dieser einzigartige Schlüssel in dem Computerendgerät durch Entschlüsseln mit einem zweiten öffentlichen Schlüssel $k_{PUB}^{NLS}$ erhalten von einer dritten Eingabe E3 die erzeugt wird in dem Computervenvaltungszenf,rum durch Verschlüsseln (48) des privaten Schlüssels vom Computerverwaltungszentrum $k_{PRIV}^{NLS}$, von dem einzigartigen Schlüssel $k_{SESSION}$, der vorher erhalten wird durch Entschlüsseln (46) mittels dieses privaten Schlüssels $k_{PRIV}^{NLS}$ von der zweiten Eingabe E2, die erzeugt wird in dem tragbaren Endgerät und übertragen wird zum Computerverwaltungszentrum.

3. Verfahren zur gesicherten Abfrage von Lieferscheinen von Gegenständen nach Anspruch 1, **dadurch gekennzeichnet, daß** man mittels eines ersten öffentlichen Schlüssels $k_{PUB}^{MMT}$ eine Signatur S1 (60) überprüft (62), die einem digitalen Bild zugeordnet ist, wobei diese Signatur erhalten wird durch Entschlüsseln (56) in dem entfernten Computerendgerät mittels des Schlüssels $k_{SESSION}$, der einzigartig und verschieden für jede Abfrage ist, von der ersten Eingabe E1, die erzeugt wird in dem tragbaren Endgerät und übertragen wird zum Computerverwaltungszentrum, wobei dieser einzigartige Schlüssel $K_{SESSION}$ übertragen wird zum Computerverwaltungszentrum mit einer Signatur S2, die diesem einzigartigen Schlüssel $k_{SESSION}$ zugeordnet ist und überprüft wird (74) in dem entfernten Computerendgerät mittels eines zweiten öffentlichen Schlüssels $k_{PUB}^{NLS}$, wobei die Signatur S2 aus der Signatur (70) resultiert, mit dem privaten Schlüssel des Computerverwaltungszentrums $k_{PRIV}^{NLS}$ des einzigartigen Schlüssels $k_{SESSION}$, der vorher durch Entschlüsseln (46) mittels dieses privaten Schlüssels $k_{PRIV}^{NLS}$ erhalten wird, von der zweiten Eingabe E2, die in dem tragbaren Endgerät erzeugt wird und übertragen wird zum Computerverwaltungszentrum.

4. Verfahren zur gesicherten Abfrage von Lieferscheinen von Gegenständen nach Anspruch 2 oder Anspruch 3, **dadurch gekennzeichnet, daß** die erste Eingabe E1 erhalten wird durch Verschlüsseln (36) mittels des einzigartigen Schlüssels $k_{SESSION}$, der Signatur S1 und die zweite Eingabe E2 erhalten wird durch Verschlüsseln (40) des einzigartigen Schlüssels $k_{SESSION}$ des zweiten öffentlichen Schlüssels $k^{NLS}_{PUB}$, die Signatur S1 aus der Signatur des digitalen des Lieferscheins mit einem privaten Schlüssel des tragbaren Endgerätes $k^{MMT}_{PRIV}$ resultiert.

5. Verfahren zur gesicherten Abfrage von Lieferscheinen von Gegenständen nach Anspruch 2 oder Anspruch 3, **dadurch gekennzeichnet, daß** der erste öffentliche Schlüssel $k^{MMT}_{PUB}$ verschlüsselt wird (80) mittels des zweiten öffentlichen Schlüssels $k^{NLS}_{PUB}$, um eine erste Eingabe von Schlüssel $E_{k1}$ zu erhalten, die zum Computerverwaltungszentrum auf der Ebene dieser ersten Eingabe von Schlüsseln $E_{k1}$ (82) übertragen wird, entschlüsselt wird (84) mittels des privaten Schlüssels des Computerverwaltungszentrums $k^{NLS}_{PRIV}$, um den ersten öffentlichen Schlüssel $k^{MMT}_{PUB}$ (86) zu gewinnen, der dann noch einmal verschlüsselt wird (88), mittels des privaten Schlüssels des Computerverwaltungszentrums $k^{NLS}_{PRIV}$, um eine zweite Eingabe von Schlüsseln $E_{k2}$ zu erhalten, aus der der Kunde durch Entschlüsseln (92) mittels des zweiten öffentlichen Schlüssels $k^{NLS}_{PUB}$ den ersten öffentlichen Schlüssel $k^{MMT}_{PUB}$ entschlüsseln kann.

6. Verfahren zur gesicherten Abfrage von Lieferscheinen von Gegenständen nach Anspruch 5, **dadurch gekennzeichnet, daß** die erste Eingabe von Schlüssel $E_{k1}$ übertragen wird zum Computerverwaltungszentrum mit dem digitalen Bild des Lieferscheins und den ersten und zweiten Eingaben E1 und E2.

7. Verfahren zur gesicherten Abfrage von Lieferscheinen von Gegenständen nach Anspruch 2 oder Anspruch 3, **dadurch gekennzeichnet, daß** der erste öffentliche Schlüssel $k^{MMT}_{PUB}$ signiert wird (100) mittels des privaten Schlüssels $k^{NLS}_{PRIV}$, um eine Signatur von Schlüssel $S_{k1}$ zu erhalten, die mit dem ersten öffentlichen Schlüssel $k^{MMT}_{PUB}$ im Computerverwaltungszentrum übertragen wird, auf dessen Ebene diese Signatur von Schlüssel $S_{k1}$ überprüft wird (104) mittels des zweiten öffentlichen Schlüssels $k^{NLS}_{PUB}$, bevor er mit dem ersten öffentlichen Schlüssel $k^{MMT}_{PUB}$ zum Endgerät des Kunden übertragen wird, auf der Ebene von weichem diese Signatur von Schlüssel $S_{k1}$ noch einmal überprüft wird (108) mittels des zweiten öffentlichen Schlüssels $k^{NLS}_{PUB}$, das Ergebnis dieser in einer Zusage oder einer Zurückweisung (110) des ersten öffentlichen Schlüssels $k^{MMT}_{PUB}$ besteht.

8. Verfahren zur gesicherten Abfrage von Lieferscheinen von Gegenständen nach Anspruch 7, **dadurch gekennzeichnet, daß** die Signatur von Schlüssel $S_{k1}$ zum Computerverwaltungszentrum mit dem digitalen Bild des Lieferscheins übertragen wird und den ersten und zweiten Eingaben E1 und E2.

9. Verfahren zur gesicherten Abfrage von Lieferscheinen von Gegenständen nach einem der Ansprüche 1 bis 8, **dadurch gekennzeichnet, daß** das Telekommunikationsnetz das Internet ist.

10. Verfahren zur gesicherten Abfrage von Lieferscheinen von Gegenständen nach einem der Ansprüche 1 bis 9, **dadurch gekennzeichnet, daß** der Vorgang des Verschlüsseins/Entschlüsselns vom Typ DES, Dreifach-DES oder AES ist.

11. Verfahren zur gesicherten Abfrage von Lieferscheinen von Gegenständen nach einem der Ansprüche 1 bis 10, **dadurch gekennzeichnet, daß** das digitale Bild des Lieferscheins mit Identifikationsdaten und anderen Informationen bezüglich der Lieferung, die am tragbaren Endgerät eingegeben sind, übertragen wird.

FIG.1

FIG.2

FIG.3

$S_{k_{PRIV}^{MMT}}[M]$

$E_{k_{session}}(S_{k_{PRIV}^{MMT}}[M])$

$E_{k_{PUB}^{NLS}}(k_{session})$

$D_{k_{PRIV}^{NLS}}[E_2]$

$S_{k_{PRIV}^{NLS}}(k_{session})$

$V_{k_{PUB}^{NLS}}[S_2]$

$D_{k_{session}}[E_1]$

$S_{k_{PRIV}^{MMT}}[M] = S_1$

$V_{k_{PUB}^{MMT}}[S_1]$

M ok

EP 1 578 055 B1

EP 1 578 055 B1

$k_{PUB}^{MMT}$ —— (E) 80 —— $E_{k_{PUB}^{NLS}}(k_{PUB}^{MMT})$ 82 —— $E_{k1}$ ⟹ 10

$k_{PUB}^{NLS}$

16

$E_{k1}$ —— (D) 84 —— $D_{k_{PRIV}^{NLS}}[E_{k1}]$ 86 —— $k_{PUB}^{MMT}$ —— (E) 88 —— $E_{k_{PRIV}^{NLS}}(k_{PUB}^{MMT})$ 90 —— $E_{k2}$ ⟹ 14

$k_{PRIV}^{NLS}$        $k_{PRIV}^{NLS}$

10

$E_{k2}$ —— (D) 92 —— $D_{k_{PUB}^{NLS}}[E_{k2}]$ 94 ————————→ $k_{PUB}^{MMT}$

$k_{PUB}^{NLS}$

14

FIG.4

FIG.5

EP 1 578 055 B1